# EUROPÄISCHE PATENTSCHRIFT

(11) **EP 2 078 849 B1**
(45) Veröffentlichungstag und Bekanntmachung des Hinweises auf die Patenterteilung: **15.08.2018**
(21) Anmeldenummer: 08022050.2
(22) Anmeldetag: 18.12.2008
(51) Int. Cl.: F03B 17/06, F03D 3/06

(54) **Wind- oder Wasserrad mit schwenkbaren Flügeln**
Wind and water turbine with pivotable blades
Éolienne et turbine à eau avec aubes pivotantes

(30) Priorität: 10.01.2008 DE 102008003904
(43) Veröffentlichungstag der Anmeldung: 15.07.2009
(73) Patentinhaber: Osterhammer, Johann jun., 83349 Palling (DE); Osterhammer, Paul, 83349 Palling (DE); Osterhammer, Martin, 83349 Palling (DE)
(72) Erfinder: Osterhammer jun., Johann, 83349 Palling (DE); Osterhammer, Paul, 83349 Palling (DE); Osterhammer, Martin, 83349 Palling (DE)
(74) Vertreter: Keilitz, Wolfgang

(56) Entgegenhaltungen:
- GB-A- 2 051 252
- US-A- 4 365 935
- US-A1- 2004 164 561

## Beschreibung

### Stand der Technik

Die Erfindung betrifft ein Windrad mit senkrechter Drehachse gemäß dem Oberbegriff des Patentanspruchs 1.

Windräder wandeln die Strömungsenergie des Windes in eine Drehbewegung um, aus der mittels eines Generators elektrischer Strom oder mechanische Formen der Kraftübertragung erzeugt werden können. Manche Windräder lassen sich auch als Wasserrad nutzen.

Wind- bzw. Wasserräder, auf die im Folgenden Bezug genommen wird, umfassen eine Drehachse mit mehreren Auslegern, an denen schwenkbar gelagerte Flügel befestigt sind. Derartige Windräder sind beispielsweise aus dem Fachbuch Felix von König, "Windenergie in praktischer Nutzung", Udo Pfriemer Verlag, München, bekannt. Das in dem Fachbuch beschriebene Jackson'sche Windrad umfasst beispielsweise eine senkrechte Drehachse mit mehreren Auslegern, an denen Drehflügel befestigt sind. Die einzelnen Drehflügel sind über einen Seilzug miteinander verbunden, mittels dessen sich die Flügel während eines Umlaufs von selbst in eine optimale Stellung zum Wind bringen. Damit wird erreicht, dass die einzelnen Flügel bei einem Umlauf immer den richtigen Anstellwinkel zum Wind einnehmen. Andererseits ist dieser Verstellmechanismus relativ aufwendig und führt bei stärkerer Strömung zu Verschleißproblemen.

Andere bekannte Windräder umfassen ebenfalls eine Verstelleinrichtung, die den Anstellwinkel der Flügel dem Wind nachführt oder die Angriffsfläche der Flügel an die Windstärke anpasst. Dies ist relativ aufwendig und verursacht zusätzlich Kosten.

Aus der US 20040164561 A1 ist ferner eine durch eine Strömung antreibbare Vorrichtung mit einer vertikalen Drehachse bekannt, an der mehrere Arme drehbar gelagert sind, wobei an den Armen Flügel befestigt sind, die in eine erste Position mit größerer Angriffsfläche und eine zweite Position mit kleinerer Angriffsfläche kippen können. Die Flügel sind dabei derart angeordnet, dass sie unter dem Einfluss der Strömung, wenn sie sich mit der Strömung bewegen, selbsttätig in die erste Position, und, wenn sie sich entgegen der Strömung bewegen, selbsttätig in die zweite Position kippen. Die paarweise an einer Achse befestigten Flügel sind jedoch miteinander fest gekoppelt, wodurch der Wirkungsgrad der Vorrichtung nicht optimal ist.

### Offenbarung der Erfindung

Es ist daher die Aufgabe der vorliegenden Erfindung, ein Wind- oder Wasserrad mit einer vertikalen Drehachse zu schaffen, das einen höheren Wirkungsgrad aufweist.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Ein wesentlicher Aspekt der Erfindung besteht darin, die Flügel des Wind- bzw. Wasserrades an den Auslegern schwenkbar derart zu lagern, dass sie unter dem Einfluss der Strömung, wenn sie sich mit der Strömung bewegen, selbsttätig in eine erste Position mit größerer Angriffsfläche kippen, und, wenn sie sich entgegen der Strömung bewegen, selbsttätig in eine zweite Position mit kleinerer Angriffsfläche kippen. Die Flügel stehen dabei nicht miteinander in Verbindung, sondern sind individuell durch den Einfluss der Strömung und der Schwerkraft in die erste, zweite oder eine dazwischen liegende Position verstellbar. Außerdem ist ein Anschlag vorgesehen, der die erste Position mit größerer Angriffsfläche definiert und der so angeordnet ist, dass die Flügel in der ersten Position gegenüber einer vertikalen Ebene geneigt sind. Eine solche Konstruktion hat den Vorteil, dass der Wirkungsgrad deutlich verbessert werden kann.

Der Masseschwerpunkt der Flügel liegt vorzugsweise außerhalb der Schwenkachse und ist so angeordnet, dass die Flügel aus der zweiten Position (ohne den Einfluss von Strömung) automatisch in eine Ruheposition mit größerer Angriffsfläche kippen. Dadurch wird das Aufstellen der Flügel unterstützt.

Die Flügel sind bezüglich der Schwenkachse vorzugsweise außerhalb ihrer geometrischen Mitte angeordnet, d.h. sie haben vorzugsweise auf einer Seite der Schwenkachse eine größere wirksame Angriffsfläche als auf der andern Seite. Unter dem Einfluss der Strömung entsteht somit ein Kippmoment, das den betreffenden Flügel entweder in Richtung der ersten oder der zweiten Position verstellt.

Gemäß einer bevorzugten Ausführungsform der Erfindung haben die Flügel ein gewölbtes Flügelprofil. Dadurch kann der Wirkungsgrad erheblich gesteigert werden, da zusätzlich zum Windwiderstand die aerodynamische Auftriebskraft am Flügel in Richtung der Drehbewegung der vertikalen Windradachse wirkt.

Die Drehachse des erfindungsgemäßen Rades ist vorzugsweise senkrecht.

Die Arme bzw. Ausleger der Vorrichtung sind vorzugsweise an mehreren Positionen entlang der Drehachse angeordnet. An je einem Arm bzw. Ausleger der Vorrichtung können ein oder mehrere Flügel angebracht werden, die sich selbstständig ausrichten können.

Die einzelnen Arme verschiedener Ebenen sind vorzugsweise versetzt zueinander angeordnet. Dadurch wird ein gleichmäßiger Antrieb des Rades erreicht.

Die Schwenkachse der einzelnen Flügel verläuft vorzugsweise waagerecht.

Gemäß einer weiteren Ausführungsform der Erfindung ist ein zweiter Anschlag so angeordnet, dass die Flügel gegen die Strömung nur bis in die waagrechte Stellung gekippt werden können, bei der der Flügel der Strömung den geringsten Widerstand bietet.

Die vertikale Drehachse ist vorzugsweise mit einer elektrischen Maschine zur Stromgewinnung verkoppelt.

### Kurze Beschreibung der Zeichnungen

Die Erfindung wird nachstehend anhand der beigefügten Zeichnungen beispielhaft näher erläutert. Es zeigen:
Fig. 1 ein Windrad mit senkrechter Drehachse gemäß einer speziellen Ausführungsform der Erfindung; und

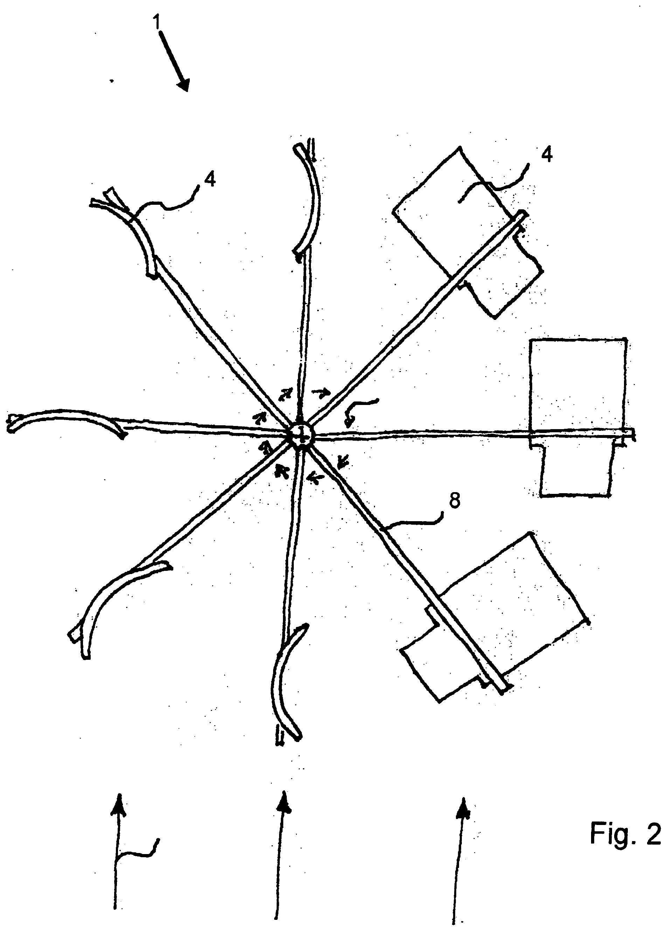

Fig. 2 ein Windrad mit acht Armen von oben.

### Ausführungsformen der Erfindung

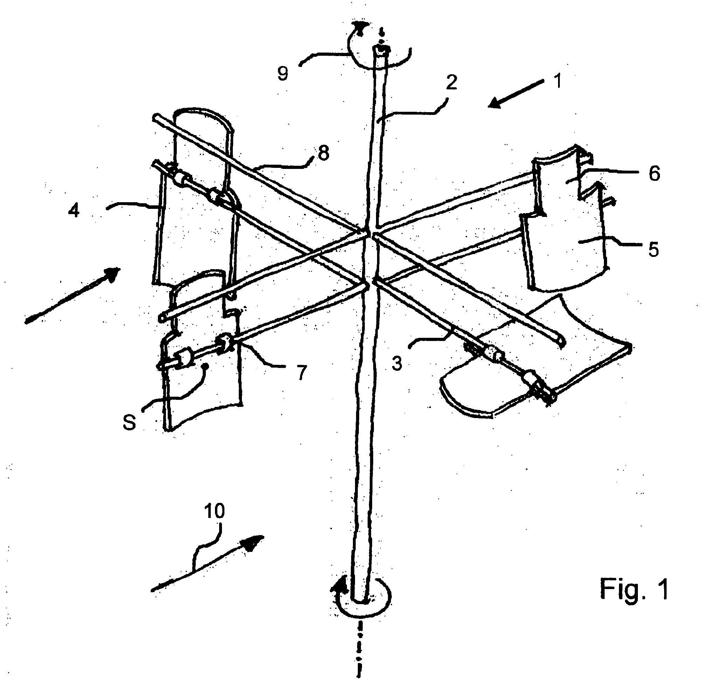

Fig. 1 zeigt ein Windrad 1 mit einer senkrechten Drehachse 2, das die Strömung (Pfeile 10) des Windes in eine Drehbewegung umwandelt. An der Drehachse 2 sind mehrere Arme bzw. Ausleger 3 vorgesehen, an denen jeweils ein Flügel 4 befestigt ist. Die Flügel 4 sind als schwenkbare Klappen realisiert, die um eine Schwenkachse 3 kippen können. Die Arme 3 bilden hier gleichzeitig die Schwenkachse.

Die Flügel 4 sind derart ausgelegt, dass sie unter dem Einfluss der Strömung, wenn sie sich mit der Strömung bewegen, selbsttätig in eine erste Position mit größerer Angriffsfläche kippen (siehe linke Seite), und, wenn sie sich entgegen der Strömung bewegen, selbsttätig in eine zweite Position mit kleinerer Angriffsfläche kippen (siehe rechte Seite). Die selbsttätige Kippbewegung der Flügel 4 beruht darauf, dass sie auf einer Seite der Schwenkachse 3 eine größere wirksame Fläche 5 als auf der anderen Seite der Schwenkachse 3.

Wenn nun der Wind von vorne gegen das Flügelprofil bläst (in der Figur links), wird die oberhalb der Schwenkachse 3 liegende Fläche 6 des Flügels 4 gegen einen Anschlag 8 gedrückt. Der Flügel 4 wird dadurch in einer aufrechten Position gehalten. Auf der anderen Seite der Drehachse 2 (in der Figur rechts) verursacht der Wind 10 dagegen ein Kippmoment in die Gegenrichtung, das den Flügel 4 in eine zweite, etwa waagerechte Position bewegt, in der der Flügel eine kleinere Windangriffsfläche aufweist. Der Flügel 4 hat daher einen wesentlich geringeren Windwiderstand als auf der linken Seite. Aufgrund der Differenz der Windwiderstände auf der Arbeitsseite (in der Figur links) und der passiven Seite (in der Figur rechts) entsteht ein Drehmoment 9 um die Drehachse 2 im Uhrzeigersinn.

Der Masseschwerpunkt eines Flügels 4 ist derart angeordnet, dass der Flügel 4 ohne den Einfluss von Strömung 10 aus der zweiten Position automatisch in Richtung einer Ruheposition mit größerer Angriffsfläche kippt. Dadurch wird das Aufstellen der Flügel 4 unterstützt

Die einzelnen Flügel 4 haben außerdem ein gewölbtes Flügelprofil. Dadurch kann ein besserer Wirkungsgrad erzielt werden, da ein Auftrieb in Drehrichtung der vertikalen Windradachse auf die Flügel wirkt.

Alternativ könnte der Anschlag 8 auch derart vorgesehen sein, dass die Flügel 4 in der ersten Position eine gegenüber der Vertikalen geneigte Stellung einnehmen. Dadurch wird das Hochklappen der Flügel 4 auf der anderen Seite erleichtert.

## Patentansprüche

1. Durch eine Strömung, insbesondere Wind oder Wasser, antreibbare Vorrichtung, umfassend eine Drehachse (2) mit einem oder mehreren Armen (3), an denen schwenkbar gelagerte Flügel (4) angeordnet sind, die in eine erste Position mit größerer Angriffsfläche und einer zweite Position mit kleinerer Angriffsfläche kippen können, wobei die Flügel (4) derart angeordnet sind, dass sie unter dem Einfluss der Strömung (10), wenn sie sich mit der Strömung bewegen, selbsttätig in die erste Position, und, wenn sie sich entgegen der Strömung (10) bewegen, selbsttätig in die zweite Position kippen, **dadurch gekennzeichnet, dass**
• die Flügel (4) nicht miteinander in Verbindung stehen, sondern jeder Flügel (4) individuell durch den Einfluss der Strömung und der Schwerkraft in die erste, zweite oder eine dazwischen liegende Position verstellbar ist;
• dass ein Anschlag (8) vorgesehen ist, an dem die Flügel (4) in der ersten Position anstehen, wobei die Fläche der Flügel (4) gegenüber einer vertikalen Ebene geneigt ist, und dass
• die Flügel (4) ein gewölbtes Flügelprofil aufweisen.

2. Vorrichtung nach Anspruch 1, **dadurch gekennzeichnet, dass** der Masseschwerpunkt der Flügel (4) so angeordnet ist, dass die Flügel (4) aus der zweiten Position, ohne den Einfluss von Strömung, automatisch in Richtung der ersten Position mit größerer Angriffsfläche kippen.

3. Vorrichtung nach Anspruch einem der vorhergehenden Ansprüche, **dadurch gekennzeichnet, dass** die Flügel (4) auf einer Seite der Schwenkachse (3) eine größere wirksame Fläche (5) aufweisen als auf der anderen Seite der Schwenkachse (3).

4. Vorrichtung nach einem der vorhergehenden Ansprüche, **dadurch gekennzeichnet, dass** die Arme (3) an mehreren Positionen entlang der Drehachse (2) angeordnet sind.

5. Vorrichtung nach Anspruch 5, **dadurch gekennzeichnet, dass** die an verschiedenen vertikalen Positionen befindlichen Arme (3) in Rotationsrichtung versetzt zueinander angeordnet sind.

6. Vorrichtung nach einem der vorhergehenden Ansprüche, **dadurch gekennzeichnet, dass** die Schwenkachse der Flügel (4) im Wesentlichen waagerecht verläuft.

7. Vorrichtung nach einem der vorhergehenden Ansprüche, **dadurch gekennzeichnet, dass** die Drehachse (2) über ein Getriebe mit einer elektrischen Maschine verbunden ist.

8. Vorrichtung nach einer der vorgehenden Ansprüche, **dadurch gekennzeichnet, dass** pro Arm ein oder mehrere Flügel angebracht sind.

## Claims

1. Device which is driven by a flow, in particular by wind or water, comprising an axis of rotation (2) with one or more arms (3) on which pivotally mounted wings (4) are arranged so that they may tilt in a first position having a larger exposed surface and a second position having a smaller exposed surface, wherein the wings (4) are arranged such that under the influence of the flow (10), while moving with the flow, automatically tilt in the first position, and, when they move against the flow (10), automatically tilt in the second position, **characterized in that**
• the wings (4) are not interconnected, but each wing (4) is individually adjustable by the influence of the flow and gravity in the first, second or an intermediate position;
• a stop (8) is provided, on which the wings (4) abut in the first position, wherein the surface of the wings (4) is inclined relative to a vertical plane and that
• the wings (4) have a curved profile.

2. Device according to claim 1, **characterized in that** the center of mass of the wings (4) is arranged so that the wings (4) from the second position, without the influence of flow, automatically tilt in the direction of the first position with a larger exposed surface.

3. Device according to one of the preceding claims, **characterized in that** the wings (4) on one side of the axis of rotation (3) a larger effective area (5) than on the other side of the axis of rotation (3).

4. Device according to one of the preceding claims, **characterized in that** the arms (3) are arranged at a plurality of positions along the axis of rotation (2).

5. Device according to claim 4, **characterized in that** the arms (3) which are mounted at different vertical positions are aligned offset to one another in the direction of rotation.

6. Device according to one of the preceding claims, **characterized in that** the pivot axis of the wings (4) is essentially horizontally.

7. Device according to one of the preceding claims, **characterized in that** the axis of rotation (2) is connected via a transmission to an electric machine.

8. Device according to one of the preceding claims, **characterized in that** one or more wings are mounted per arm.

## Revendications

1. Dispositif susceptible d'être entraîné par un courant, en particulier le vent ou l'eau, comprenant un axe de rotation (2) doté d'un ou plusieurs bras (3), sur lesquels sont disposées des pales (4) montées de manière pivotante qui peuvent s'incliner dans une première position présentant une plus grande surface d'attaque et une deuxième position présentant une plus petite surface d'attaque, les pales (4) étant disposées de manière qu'elles s'inclinent automatiquement sous l'influence du courant (10) dans la première position lorsqu'elles se déplacent avec le courant et automatiquement dans la deuxième position lorsqu'elles se déplacent à contre-courant (10), **caractérisé en ce que**
• les pales (4) ne sont pas liées les unes aux autres, mais chaque pale (4) est réglable individuellement sous l'influence du courant et de la gravité dans la première ou deuxième position ou dans une position située entre les deux ;
• **en ce qu'**une butée (8) est prévue, contre laquelle les pales (4) prennent appui dans la première position, la surface des pales (4) étant inclinée par rapport à un plan vertical, et **en ce que**
• les pales (4) présentent un profil de pale courbé.

2. Dispositif selon la revendication 1, **caractérisé en ce que** le centre de gravité des pales (4) est situé de manière que les pales (4) s'inclinent automatiquement depuis la deuxième position, sans l'influence du courant, en direction de la première position présentant une plus grande surface d'attaque.

3. Dispositif selon l'une des revendications précédentes, **caractérisé en ce que** les pales (4) présentent sur un côté de l'axe de rotation (3) une surface active (5) plus grande que sur l'autre côté de l'axe de rotation (3).

4. Dispositif selon l'une des revendications précédentes, **caractérisé en ce que** les bras (3) sont disposés au niveau de plusieurs positions le long de l'axe de rotation (2).

5. Dispositif selon la revendication 5, **caractérisé en ce que** les bras (3) se trouvant dans différentes positions verticales sont disposés dans le sens de rotation de manière décalée les uns par rapport aux autres.

6. Dispositif selon l'une des revendications précédentes, **caractérisé en ce que** l'axe de rotation des pales (4) s'étend sensiblement horizontalement.

7. Dispositif selon l'une des revendications précédentes, **caractérisé en ce que** l'axe de rotation (2) est relié à une machine électrique par le biais d'un engrenage.

8. Dispositif selon l'une des revendications précédentes, **caractérisé en ce qu'**une ou plusieurs pales sont prévues par bras.
